**Europäisches Patentamt**

**European Patent Office**

**Office européen des brevets**

(19)

(11) Veröffentlichungsnummer : **0 448 730 B1**

(12)

# EUROPÄISCHE PATENTSCHRIFT

(45) Veröffentlichungstag der Patentschrift :
**11.11.92 Patentblatt 92/46**

(51) Int. Cl.⁵ : **F26B 13/18, F16L 39/04, D21G 1/02**

(21) Anmeldenummer : **90103521.2**

(22) Anmeldetag : **23.02.90**

(54) **Dichtkopf zum Zuführen eines Wärmeträgermediums zu einem rotierenden Drucksystem.**

(43) Veröffentlichungstag der Anmeldung :
**02.10.91 Patentblatt 91/40**

(45) Bekanntmachung des Hinweises auf die
Patenterteilung :
**11.11.92 Patentblatt 92/46**

(84) Benannte Vertragsstaaten :
**AT CH DE ES FR GB IT LI NL**

(56) Entgegenhaltungen :
**GB-A- 348 321
GB-A- 2 187 526
US-A- 2 324 298**

(73) Patentinhaber : **Christian Maier GmbH & Co.
Maschinenfabrik
Würzburger Strasse 65-69
W-7920 Heidenheim-Schnaitheim (DE)**

(72) Erfinder : **Der Erfinder hat auf seine Nennung
verzichtet**

(74) Vertreter : **Fay, Hermann, Dipl.-Phys. Dr. et al
Ensingerstrasse 21 Postfach 1767
W-7900 Ulm (Donau) (DE)**

**Beschreibung**

Die Erfindung betrifft einen Dichtkopf zum Zuführen eines Wärmeträgermediums, insbes. eines Wärmeträgeröls, zu einem rotierenden Drucksystem, wie einer Trockentrommel, Heizwalze oder dergl., bestehend aus einem an das Drucksystem angeschlossenen rohrförmigen Rotor und einem über Wälzlager auf dem Rotor angeordneten stillstehenden Dichtkopfgehäuse mit mindestens einem Anschlußstutzen für eine das Wärmeträgermedium führende Anschlußleitung, wobei im Inneren des Dichtkopfgehäuses der Rotor in offener Verbindung mit dem Anschlußstutzen steht und axial zwischen dem Anschlußstutzen und den Wälzlagern eine den Rotor gegen die Wand des Dichtkopfgehäuses abdichtende primäre Gleitringdichtung angeordnet ist.

Aus der GB-A-348 321 sind Dichtköpfe dieser Art grundsätzlich bekannt, wobei allerdings bei dem in der GB-A-348 321 beschriebenen Dichtkopf die primäre Gleitringdichtung und die Wälzlager durch die Dichtpackungen einer Stopfbüchse ersetzt sind, welche sowohl die Dicht- als auch die Lagerfunktion erfüllen. Unabhängig davon kann durch die primäre Dichtung leckbedingt austretendes Wärmeträgermedium mit der Atmosphäre und daher mit Luftsauerstoff in Verbindung kommen. Bei hohen Drehzahlen des Drucksystems und hoher Temperaturen des Wärmeträgermediums können daher nicht nur wegen der dann entsprechend hohen Temperatur des Schmiermittels hinsichtlich der Lagerschmierung Probleme auftreten, sondern auch im Hinblick darauf, daß unter solchen Betriebsbedingungen vermehrt Wärmeträgermedium an der Gleitringdichtung austreten und durch die Verbindung mit dem Sauerstoff der Atmosphäre Veränderungen erfahren kann, welche die Dichtfunktion der Gleitringdichtung weiter beeinträchtigen.

Der Erfindung liegt die Aufgabe zugrunde, einen Dichtkopf der eingangs genannten Art so auszubilden, daß er zum Betrieb bei großen Drehzahlen und hohen Temperaturen des Wärmeträgermediums besonders geeignet ist.

Diese Aufgabe wird nach der Erfindung dadurch gelöst, daß der primären Gleitringdichtung atmosphärenseitig eine sekundäre Gleitringdichtung zwischen dem Rotor und der Wand des Dichtkopfgehäuses nachgeschaltet ist, die sich auf der der primären Gleitringdichtung axial gegenüber liegenden Seite der Wälzlager befindet, und daß der Raum zwischen der primären und sekundären Gleitringdichtung am Dichtkopfgehäuese einen Zu- und Ablauf für ein außerhalb des Dichtkopfgehäuses im Umlauf geführtes und gekühltes Vorlagemedium aufweist.

Das im Raum zwischen der primären und der sekundären Dichtung enthaltene Vorlagemedium verhindert, daß an der primären Dichtung etwa austretendes heißes Wärmeträgermedium mit Sauerstoff in Kontakt kommen und sich chemisch verändern, insbes. im Fall eines organischen Wärmeträgeröls verkracken kann. Da das Vorlagemedium bei seinem Umlauf außerhalb des Dichtkopfgehäuses ständige Kühlung erfährt, also wesentlich kühler ist als das Wärmeträgermedium, gewährleistet es eine einwandfreie Schmierung der Wälzlager und kann selbst wegen seiner dafür zu geringen Temperatur keine die Dichtwirkung störende chemische Änderung erfahren, wenn es an der sekundären Dichtung leckbedingt austreten und mit der Atmosphäre in Verbindung kommen sollte. Die vergleichsweise geringe Temperatur des Vorlagemediums hat im übrigen den Vorteil, daß für das Vorlagemedium kein spezielles Schmieröl erforderlich ist, sondern das Wärmeträgermedium selbst verwendet werden kann, also keine Probleme auftreten können, wenn sich an der primären Dichtung etwa austretendes heißes Wärmeträgermedium mit dem stofflich gleichen, aber erheblich kühleren Vorlagemedium mischen sollte.

In bevorzugter Ausführungsform ist die primäre Gleitringdichtung auf der radialen Außenseite vom Wärmeträgermedium, auf der Innenseite vom Vorlagemedium beaufschlagt. Die Abdichtung gegen das Wärmeträgermedium erfolgt dann radial von außen nach innen, also entgegen den durch die Rotation verursachten Zentrifugalkräften, und wird daher insgesamt verbessert. Eine noch weitere Verbesserung der Dichtwirkung an der primären Gleitringdichtung kann erfindungsgemäß dadurch erreicht werden, daß die primäre Gleitringdichtung mit der Wand des Dichtkopfgehäuses einen ringförmigen Stauraum bildet, der von dem vom Wärmeträgermedium beaufschlagten übrigen Innenraum des Dichtkopfgehäuses durch eine ringförmige Stauscheibe abgeschirmt ist. Diese Stauscheibe bewirkt, daß im Stauraum und damit im Bereich der primären Gleitringdichtung kein nennenswerter Austausch des Wärmeträgermediums auftreten kann und daher die Möglichkeit einer Abkühlung des Wärmeträgermediums im Stauraum besteht. Im übrigen verhindert sie Verschmutzungen durch gröbere Partikel im Bereich der Dichtung.

In weiter bevorzugter Ausführungsform ist in der Wand des Rotors ein geschlossener hohler Ringraum ausgebildet, der sich axial über den Bereich beider Dichtungen und der Wälzlager erstreckt. Dieser hohle Ringraum bildet einen statischen Wärmeschutz, der die Wärmeübertragung aus dem Wärmeträgermedium durch die Wand des Rotors in den Lagerraum und auf das Vorlagemedium nennenswert verringert. Es kann dadurch der Vorteil eintreten, daß das Vorlagemedium für seine Zirkulation und Kühlung keines zwangsweisen Zirkulationsantriebs außerhalb des Dichtkopfgehäuses bedarf, weil zur ausreichenden Kühlung schon allein sein Umlauf aufgrund seiner eigenen Temperaturunterschiede nach dem Prinzip eines sog. Thermosyphons genügt.

Es besteht auch die Möglichkeit, die Drehung des Rotors innerhalb des Dichtkopfgehäuses für einen Zirkulationsantrieb des Vorlagemediums auszunutzen. Eine dafür besonders geeignete Ausführungsform ist dadurch gekennzeichnet, daß im Dichtkopfgehäuse zwischen den Wälzlagern und der sekundären Dichtung ein den Rotor umgebender, zu den Wälzlagern und zum Rotor hin offener Ringraum ausgebildet ist, in dem am Rotor fest angeordnete Förderorgane für das Vorlagemedium umlaufen und einen Förderdruck für die Zirkulation des Vorlagemediums erzeugen. Der Rotor mit den Förderorganen wirkt dann in dem mit dem Vorlagemedium erfüllten Ringraum im Sinne einer Pumpe auf das Vorlagemedium ein, das dadurch zum Umlauf außerhalb des Dichtkopfgehäuses gezwungen wird. Im einzelnen wird die Anordnung zweckmäßigerweise so getroffen, daß in der den Ringraum radial auswärts begrenzenden Umfangsfläche mindestens einer der Anschlüsse für das Vorlagemedium mündet. Die Förderorgane sind vorzugsweise Förderschaufeln, die radial abstehend an einem fest auf dem Rotor sitzenden Förderrad ausgebildet sind.

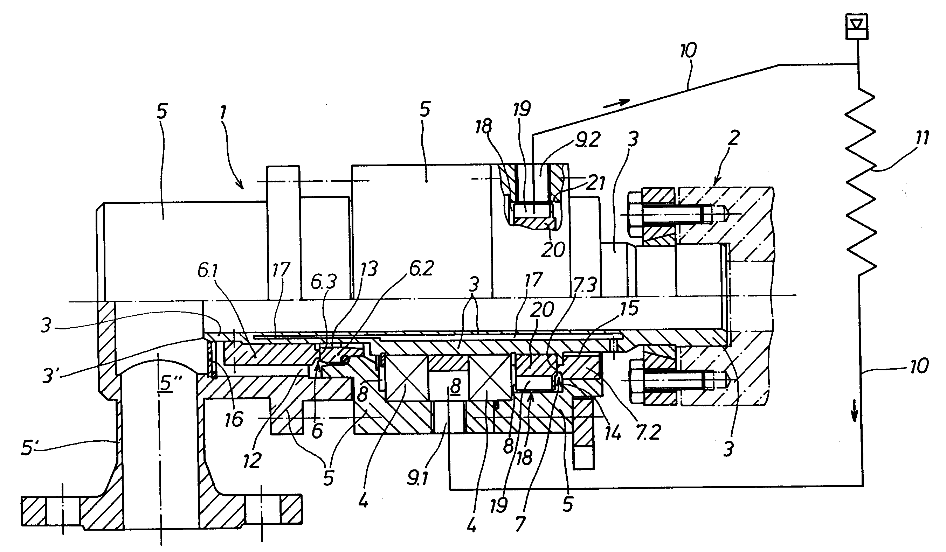

Im folgenden wird die Erfindung an einem in der Zeichnung dargestellten Ausführungsbeispiel näher erläutert; die einzige Figur zeigt einen Dichtkopf nach der Erfindung teils in Seitenansicht, teils im Axialschnitt.

Der in der Zeichnung dargestellte Dichtkopf 1 dient zum Zuführen eines Wärmeträgermediums, insbesondere eines Wärmeträgeröls, zu einem rotierenden Drucksystem 2, beispielsweise einer Trockentrommel, Heizwalze oder dergl., das in der Zeichnung nur mit seiner Anschlußeinrichtung angedeutet ist. Dazu besteht der Dichtkopf 1 aus einem an das Drucksystem 2 angeschlossenen rohrförmigen Rotor 3 und einem über zwei Wälzlager 4 auf dem Rotor 3 angeordneten stillstehenden Dichtkopfgehäuse 5, das einen Anschlußstutzen 5' für eine das Wärmeträgermedium führende, in der Zeichnung nicht dargestellte Anschlußleitung besitzt. Im Inneren des Dichtkopfgehäuses 5 steht der Rotor 3 am offenen Rohrende 3' in unmittelbarer Verbindung mit dem Anschlußstutzen 5', so daß das Wärmeträgermedium durch den Anschlußstutzen 5' und den Rotor 3 in das Drucksystem 2 gelangen kann. Axial zwischen dem Anschlußstutzen 5' und den Wälzlagern 4 ist eine Gleitringdichtung 6 angeordnet, die den Rotor 3 gegen die Wand des Dichtkopfgehäuses 5 abdichtet. Diese Gleitringdichtung 6 besteht aus einem am Rotor 3 befestigten Dichtungsring 6.1 und einem am Dichtkopfgehäuse 5 feststehend angeordneten Dichtungsring 6.2. Beide Dichtungsringe 6.1, 6.2 dichten gegeneinander an der ringförmigen Dichtfläche 6.3 ab. Dieser primären Gleitringdichtung 6 ist atmosphärenseitig eine sekundäre Gleitringdichtung 7, ebenfalls zwischen dem Rotor 3 und der Wand des Dichtkopfgehäuses 5 nachgeschaltet, deren am Dichtkopfgehäuse 5 feststehend angeordneter Dichtring 7.2 in einer ringförmigen Gleitfläche 7.3 des Rotors 3 anliegt. Diese sekundäre Gleitringdichtung 7 befindet sich auf der der primären Gleitringdichtung 6 axial gegenüberliegenden Seite der Wälzlager 4, so daß der die Wälzlager 4 enthaltende Raum 8 in den Raum zwischen der primären und der sekundären Gleitringdichtung 6, 7 einbezogen ist. Dieser Raum zwischen den beiden Gleitringdichtungen 6, 7 ist über Zu- und Abfuhranschlüsse 9.1, 9.2 am Dichtkopfgehäuse 5 mit einem Vorlagemedium beaufschlagt, das zwischen den Zu- und Abfuhranschlüsen 9.1, 9.2 in einem in der Zeichnung nur schematisch angedeuteten Leitungssystem 10 außerhalb des Dichtkopfes 5 im Umlauf geführt ist. In dem Leitungssystem 10 befindet sich eine Vorrichtung 11 zur Kühlung des Vorlagemediums, das somit ständig zirkuliert und gekühlt wird. Im einzelnen ist die primäre Gleitringdichtung 6 auf der radialen Außenseite bei 12 vom Wärmeträgermedium und auf der Innenseite in dem Ringraum 13 vom Vorlagemedium beaufschlagt. An der sekundären Gleitringdichtung 7 steht das Vorlagemedium bei 14 radial außen an, während zur radialen Innenseite der Gleitringdichtung 7 die offene Atmosphäre durch den Ringspalt 15 freien Zutritt hat. An der primären Gleitringdichtung 6 bildet der Rotor 3 mit der Wand des Dichtkopfgehäuses 5 einen ringförmigen Stauraum 12. Dieser Stauraum 12 ist von dem vom Wärmeträgermedium beaufschlagten übrigen Innenraum 5″ des Dichtkopfgehäuses 5 durch eine ringförmige Stauscheibe 16 abgeschirmt. Diese Stauscheibe 16 reduziert den Austausch des Wärmeträgermediums zwischen dem Innenraum 5″ und dem Stauraum 12, so daß das Wärmeträgermedium an der primären Gleitringdichtung 6 niedrigere Temperatur als anschlußstutzenseitig vor der Stauscheibe 16 besitzt. In der Wand des Rotors 3 ist ein hohler Ringraum 17 ausgebildet, der sich axial über der Bereich beider Gleitringdichtungen 6, 7 und Wälzlager 4 erstreckt und den direkten Wärmetransport aus dem Inneren des Rotors 3 durch die Rotorwand hindurch zu den Gleitringdichtungen 6, 7 und den Lagern 4 verringert.

Zum Zirkulationsantrieb des Vorlagemediums ist im Dichtkopfgehäuse 5 zwischen den Wälzlagern 4 einerseits und der sekundären Gleitringdichtung 7 andererseits ein den Rotor 3 umgebender, axial zu den Wälzlagern 4, radial zum Rotor 3 hin offener Ringraum 18 ausgebildet. In diesem Ringraum 18 können am Rotor 3 fest angeordnete Förderorgane 19 für das Vorlagemedium umlaufen und einen Förderdruck für die Zirkulation des Vorlagemediums erzeugen, wenn das Drucksystem 2 und mit ihm der Rotor 3 gegenüber dem Dichtkopfgehäuse 5 rotieren. Die Förderorgane 19 sind Förderschaufeln, die radial abstehend an einem fest auf dem Rotor 3 sitzenden Förderrad 20 ausgebildet sind. Das von den Förderorganen 19 radial auswärts beschleunigte Vorlagemedium strömt zunächst axial in den Ringraum 18 ein und radial durch den Abfuhranschluß 9.2 aus, der in der den Ringraum 18 radial auswärts begrenzenden Umfangsfläche 21 mündet.

**Patentansprüche**

1. Dichtkopf zum Zuführen eines Wärmeträgermediums, insbes. eines Wärmeträgeröls, zu einem rotierenden Drucksystem (2), wie einer Trockentrommel, Heizwalze oder dergl., bestehend aus einem an das Drucksystem (2) angeschlossenen rohrförmigen Rotor (3) und einem über Wälzlager (4) auf dem Rotor angeordneten stillstehenden Dichtkopfgehäuse (5) mit mindestens einem Anschlußstutzen (5′) für eine das Wärmeträgermedium führende Anschlußleitung, wobei im Inneren des Dichtkopfgehäuses (5) der Rotor (3) in offener Verbindung mit dem Anschlußstutzen (5′) steht und axial zwischen dem Anschlußstutzen (5′) und den Wälzlagern (4) eine den Rotor (3) gegen die Wand des Dichtkopfgehäuses (5) abdichtende primäre Gleitringdichtung (6) angeordnet ist, dadurch gekennzeichnet, daß der primären Gleitringdichtung (6) atmosphärenseitig eine sekundäre Gleitringdichtung (7) zwischen dem Rotor (3) und der Wand des Dichtkopfgehäuses (5) nachgeschaltet ist, die sich auf der der primären Gleitringdichtung (6) axial gegenüber liegenden Seite der Wälzlager (4) befindet, und daß der Raum zwischen der primären und sekundären Gleitringdichtung (6, 7) am Dichtkopfgehäuse (5) einen Zu- und Ablauf (9.1, 9.2) für ein außerhalb des Dichtkopfgehäuses (5) im Umlauf geführtes und gekühltes Vorlagemedium aufweist.

2. Dichtkopf nach Anspruch 1, dadurch gekennzeichnet, daß die primäre Gleitringdichtung (6) auf der radialen Außenseite vom Wärmeträgermedium, auf der Innenseite vom Vorlagemedium beaufschlagt ist.

3. Dichtkopf nach Anspruch 2, dadurch gekennzeichnet, daß an der primären Gleitringdichtung (6) der Rotor (3) mit der Wand des Dichtkopfgehäuses (5) einen ringförmigen Stauraum (12) bildet, der von dem vom Wärmeträgermedium beaufschlagten übrigen Innenraum (5″) des Dichtkopfgehäuses (5) durch eine ringförmige Stauscheibe (16) abgeschirmt ist.

4. Dichtkopf nach einem der Ansprüche 1 bis 3, dadurch gekennzeichnet, daß in der Wand des Rotors (3) ein geschlossener hohler Ringraum (17) ausgebildet ist, der sich axial über den Bereich beiden Dichtungen (6, 7) und der Wälzlager (4) erstreckt.

5. Dichtkopf nach einem der Ansprüche 1 bis 4, dadurch gekennzeichnet, daß im Dichtkopfgehäuse (5) zwischen den Wälzlagern (4) und der sekundären Dichtung (7) ein den Rotor (3) umgebender, zu den Wälzlagern (4) und zum Rotor (3) hin offener Ringraum (18) ausgebildet ist, in dem am Rotor (3) fest angeordnete Förderorgane (19) für das Vorlagemedium umlaufen und einen Förderdruck für die Zirkulation des Vorlagemediums erzeugen.

6. Dichtkopf nach Anspruch 5, dadurch gekennzeichnet, daß in der den Ringraum (18) radial auswärts begrenzenden Umfangsfläche (21) mindestens einer der Anschlüsse (9.2) für das Vorlagemedium mündet.

7. Dichtkopf nach Anspruch 5 oder 6, dadurch gekennzeichnet, daß die Förderorgane (19) aus Förderschaufeln bestehen, die radial abstehend an einem fest auf dem Rotor (3) sitzenden Förderrad (20) ausgebildet sind.

**Claims**

1. Sealing head for supplying a heat transfer medium, in particular a heat transfer oil, to a rotary pressure system (2), such as a drying drum, heating roller or the like, consisting of a tubular rotor (3) attached to the pressure system (2) and of a stationary sealing head housing (5) mounted on the rotor via roller bearings (4), with at least one pipe union (5′) for a joining pipe carrying the heat transfer medium, wherein inside the sealing head housing (5) the rotor (3) is in open connection with the pipe union (5′) and a primary axial face seal (6), which seals the rotor (3) against the wall of the sealing head housing (5), is mounted axially between the pipe union (5′) and the roller bearings (4), characterised in that a secondary axial face seal (7) is connected in series to the primary axial face seal (6) on the atmospheric side, between the rotor (3) and the wall of the sealing head housing (5), and is located on the side of the roller bearings (4) axially opposite the primary axial face seal (6), and in that the space between the primary and secondary axial face seal (6, 7) on the sealing head housing (5) has an inlet and and outlet (9.1, 9.2) for a cooled condenser medium circulating outside the sealing head housing (5).

2. Sealing head according to claim 1, characterised in that the primary axial face seal (6) is acted on by the heat transfer medium on the radial exterior and by the condenser medium on the interior.

3. Sealing head according to claim 2, characterised in that on the primary axial face seal (6) the rotor (3) forms with the wall of the sealing head housing (5) an annular retarding chamber (12), which is protected by an annular retarding disc (16) from the remaining interior space (5″) of the sealing head housing (5) acted on by the heat transfer medium.

4. Sealing head according to one of claims 1 to 3, characterised in that in the wall of the rotor (3) a sealed, hollow annular chamber (17) is formed, which extends axially over the area of the two seals (6, 7) and the roller bearings (4).

5. Sealing head according to one of claims 1 to 4, characterised in that in the sealing head housing (5) between the roller bearings (4) and the secondary seal (7), an annular chamber (18) is formed, which surrounds the rotor (3) and is open to the roller bearings (4) and the rotor (3) and in which conveyor elements (19) for the condenser medium mounted rigidly on the rotor (3) revolve and generate a feed pressure for circulating the supply medium.

6. Sealing head according to claim 5, characterised in that at least one of the connections (9.2) for the condenser medium opens into the circumferential face (21) defining the annular chamber (18) radially on the outside.

7. Sealing head according to claim 5 or 6, characterised in that the conveyor elements (19) consist of conveyor blades, which are formed so as to project radially on a conveyor wheel (20) resting permanently on the rotor (3).

**Revendications**

1. Tête d'étanchéité pour l'amenée d'un fluide caloporteur, en particulier d'une huile caloporteuse, vers un système de compression (2) tournant, par exemple un tambour de séchage, un cylindre de chauffage ou analogue, comprenant un rotor tubulaire (3) raccordé au système de compression (2) et un carter de tête d'étanchéité (5) stationnaire monté par l'intermédiaire de paliers à roulement (4) sur le rotor et muni d'au moins un raccord (5′) pour une conduite de raccordement conduisant le fluide caloporteur, le rotor (3) communiquant librement, à l'intérieur du carter de tête d'étanchéité (5), avec le raccord (5′) et une garniture étanche à anneau glissant primaire (6) assurant l'étanchéité entre le rotor (3), et la paroi du carter de tête d'étanchéité (5) étant montée axialement entre le raccord (5′) et les paliers à roulement (4), **caractérisé par le fait** que la garniture étanche à anneau glissant primaire (6) est suivie, du côté atmosphère, d'une garniture étanche à anneau glissant secondaire (7) qui est montée entre le rotor (3) et la paroi du carter de tête d'étanchéité (5) et se situe axialement du côté des paliers à roulement (4) opposé à la garniture étanche à anneau glissant primaire (6), et que l'espace entre les garnitures étanches à anneau glissant primaire et secondaire (6, 7) comporte sur le carter de tête d'étanchéité (5) une arrivée et une sortie (9.1, 9.2) pour un fluide de barbotage recyclé et refroidi à l'extérieur du carter de tête d'étanchéité (5).

2. Tête d'étanchéité selon la revendication 1, caractérisée par le fait que la garniture étanche à anneau glissant primaire (6) est sollicitée sur la face radialement extérieure par le fluide caloporteur et sur la face intérieure par le fluide de barbotage.

3. Tête d'étanchéité selon la revendication 2, caractérisée jar le fait que sur la garniture étanche à anneau glissant primaire (6), le rotor (3) forme avec la paroi du carter de tête d'étanchéité (5) une capacité de retenue annulaire (12) qui est séparée du reste de l'espace intérieur (5″) du carter de tête d'étanchéité (5) alimenté en fluide caloporteur, par un écran réducteur de pression annulaire (16).

4. Tête d'étanchéité selon l'une des revendications 1 à 3, caractérisée par le fait que dans la paroi du rotor (3) est conformé un espace annulaire creux (17) qui s'étend axialement sur la région des deux garnitures étanches à anneau glissant (6, 7) et des paliers à roulement (4).

5. Tête d'étanchéité selon l'une des revendications 1 à 4, caractérisée par le fait que dans le carter de tête d'étanchéité (5), entre les paliers à roulement (4) et la garniture étanche à anneau glissant secondaire (7), est conformé un espace annulaire (18) entourant le rotor (3) et ouvert en direction des paliers à roulement (4) et du rotor (3), dans lequel tournent des organes de refoulement (19) pour le fluide de barbotage qui sont montés de manière fixe sur le rotor (3) et génèrent une pression de refoulement pour la circulation du fluide de barbotage.

6. Tête d'étanchéité selon la revendication 5, caractérisée par le fait que dans la surface périphérique (21) qui délimite l'espace annulaire (18) radialement vers l'extérieur, débouche au moins l'un des raccords (9.2) pour le fluide de barbotage.

7. Tête d'étanchéité selon l'une des revendications 5 ou 6, caractérisée par le fait que les organes de refoulement (19) sont réalisés sous la forme d'aubes de refoulement conformées sur une roue de refoulement (20) solidaire du rotor (3) de façon à dépasser dans le sens radial.

EP 0 448 730 B1